# EUROPÄISCHE PATENTANMELDUNG

(11) **EP 2 600 244 A1**
(43) Veröffentlichungstag der Anmeldung: **05.06.2013**
(21) Anmeldenummer: 11191717.5
(22) Anmeldetag: 02.12.2011
(51) Int. Cl.: G06F 9/445, G06F 21/00

(54) **Computer-implementiertes Verfahren zur standortbasierten Kontrolle eines Standorts eines Downloads und/oder eines Betriebs einer Software**

(71) Anmelder: Siemens Aktiengesellschaft, 80333 München (DE)
(72) Erfinder: Dombrowski, Sascha, 90475 Nürnberg (DE); Jöhnßen, Oliver, 91058 Erlangen (DE)

(57) **Zusammenfassung**

Die Erfindung betrifft ein Verfahren zur standortbasierten Kontrolle eines Standorts eines Downloads und/oder eines Betriebs einer ersten Software (108) auf einer Vorrichtung (106), wobei die Vorrichtung (106) dazu ausgebildet ist, die erste Software (108) durch den Download von einem Download-Server (100) zu empfangen und/oder die erste Software (108) zu betreiben, wobei ein Mobilfunkgerät (102) mit der Vorrichtung (106) verbunden ist, wobei das Verfahren umfasst:
- Ermittlung mindestens eines Mobilfunknetzes, welches von einem aktuellen Standort des Mobilfunkgeräts (102) empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software (108) durch den Download-Server (100) und/oder durch die Vorrichtung (106), im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads und/oder des Betriebs der ersten Software (108) durch den Download-Server (100) und/oder durch die Vorrichtung (106), im Falle, dass der erste Abgleich ergibt, dass der aktuelle Standort des Mobilfunkgeräts (102) von der Menge der Soll-Standorte abweicht.

## Beschreibung

Die Erfindung betrifft ein Verfahren zur standortbasierten Kontrolle eines Standorts eines Downloads und/oder eines Betriebs einer Software, eine Vorrichtung zur standortbasierten Kontrolle eines Standorts eines Downloads und/oder eines Betriebs einer Software sowie ein Computerprogrammprodukt.

Im Stand der Technik ist bisher noch keine hinreichend sichere Methode weder zur eindeutigen Identifizierung des Empfängers eines Software-Downloads per Internet noch zur eindeutigen Identifizierung des Standortes des Empfängers des Software-Downloads bekannt. Ebenfalls gibt es bisher noch keine hinreichend sichere Methode zur gezielten Verhinderung eines illegalen Betreibens einer Software an einem nicht zulässigen Standort eines Computer-Endgeräts oder einer speicherprogrammierbaren Steuerung.

Der Erfindung liegt die Aufgabe zugrunde, ein verbessertes Verfahren zur standortbasierten Kontrolle eines Standorts eines Downloads und/oder eines Betriebs einer Software, eine verbesserte Vorrichtung zur standortbasierten Kontrolle eines Standorts eines Downloads und/oder eines Betriebs einer Software sowie ein verbessertes Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Verfahren zur standortbasierten Kontrolle eines Standorts eines Downloads und/oder eines Betriebs einer ersten Software auf einer Vorrichtung geschaffen, wobei die Vorrichtung dazu ausgebildet ist, die erste Software durch den Download von einem Download-Server zu empfangen und/oder die erste Software zu betreiben, wobei ein Mobilfunkgerät mit der Vorrichtung verbunden ist, wobei das Verfahren umfasst:
- Ermittlung mindestens eines Mobilfunknetzes, welches von einem aktuellen Standort des Mobilfunkgeräts empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software durch den Download-Server und/oder durch die Vorrichtung, im Falle, dass der erste Abgleich ergibt, dass der aktuelle Standort des Mobilfunkgeräts mit einem Soll-Standort der Menge von Soll-Standorten übereinstimmt,
- Abruf des Downloads und/oder des Betriebs der ersten Software durch den Download-Server und/oder durch die Vorrichtung, im Falle, dass der erste Abgleich ergibt, dass der aktuelle Standort des Mobilfunkgeräts von der Menge der Soll-Standorte abweicht.

Ausführungsformen der Erfindung können den Vorteil haben, dass auf eine sichere und eindeutige Weise eine Identifizierung eines Downloadziels sowie des Standortes des Endgeräts, auf dem die Software betrieben wird, auf einer Granularitätsebene eines Staates oder einer geografischen Region möglich ist. Dies wiederum ermöglicht eine standortbasierte Kontrolle eines Software-Downloads von einem Download-Server aus dem Internet. Durch Abgleich der von dem Mobilfunkgerät empfangbaren Mobilfunkanbieter, welches mit dem Computer-Endgerät oder einer speicherprogrammierbaren Steuerung verbunden ist, kann auf sichere Weise identifiziert werden, ob sich das Downloadziel der Software in einem zulässigen Staat oder in einer zulässigen geografischen Region befindet. Ebenso kann identifiziert werden, ob das Computer-Endgerät oder die speicherprogrammierbare Steuerung, auf welcher eine Software betrieben wird, sich in einem erlaubten Staat oder innerhalb einer erlaubten geografischen Region befindet. Die Identifizierung des Standorts ermöglicht eine Kontrolle hinsichtlich des Software-Downloads und hinsichtlich des Betriebs der Software, indem nach einem Abgleich der von dem Mobilfunkgerät empfangbaren Mobilfunkanbieter mit einer Liste zulässiger Mobilfunkanbieter ein Entscheidungskriterium vorliegt, ob ein angeforderter Software-Download oder ein Software-Betrieb gestartet werden soll oder unterbunden werden soll.

Dabei bedeutet z.B. Zulässigkeit eines Staates oder einer geografischen Region, dass der jeweilige Staat oder die jeweilige geografische Region exportkontrollrechtlich keinerlei Beschränkungen hinsichtlich eines Downloads oder eines Betriebs einer Software unterliegt.

Ausführungsformen der Erfindung bieten z.B. für ein wirtschaftliches Unternehmen den Vorteil, dass eine von dem Unternehmen vertriebene Software weltweit zum Download bzw. zum Erwerb über Internet angeboten werden kann, ohne dass es zu exportkontrollrechtlichen Verletzungen kommen könnte. Denn Ausführungsformen der Erfindung ermöglichen eine länderspezifische Kontrolle. Nur ein legaler Download und/oder ein legales Betreiben einer Software werden dadurch erlaubt.

Nach einer Ausführungsform der Erfindung wird zur Durchführung des ersten Abgleichs eine erste Information über das übermittelte Mobilfunknetz an den Download-Server oder an die Vorrichtung übermittelt, wobei die Übermittlung der ersten Information durch das Mobilfunkgerät verschlüsselt erfolgt.

Ausführungsformen der Erfindung können den Vorteil haben, dass eine gesicherte Ermittlung des geografischen Standorts des Mobilfunkgeräts auf Länder-granulärer Ebene erfolgt. Dadurch, dass das Mobilfunkgerät mit der Vorrichtung direkt verbunden ist, erfolgt gleichzeitig auch eine Ermittlung des geografischen Standorts der Vorrichtung, auf welche die erste Software gedownloaded werden soll bzw. betrieben werden soll. Dabei beinhaltet eine erste Information z.B. ein beliebiges G3-Netz, UMTS oder LTE-Netz.

Dadurch, dass die Informationsübermittlung verschlüsselt erfolgt, wird die Informationsübermittlung fälschungssicher und unlesbar für andere Empfangsgeräte vorgenommen.

Nach einer Ausführungsform der Erfindung erfolgt die Ermittlung des mindestens einen Mobilfunknetzes und die Durchführung der ersten Abfrage aufgrund einer Berechtigungsanfrage der zweiten Vorrichtung, wobei das Verfahren ferner eine Aktionsanfrage zur Durchführung des eigentlichen Downloads und/oder des Betriebs der ersten Software umfasst, wobei die Vorrichtung ferner netzwerkfähig ist, wobei eine zweite Software auf dem Mobilfunkgerät installiert ist, wobei die zweite Software dazu ausgebildet ist, einen zum Zeitpunkt der Berechtigungsanfrage gültigen ersten hardwarespezifischen Identifikator der netzwerkfähigen Vorrichtung zu ermitteln und diesen ersten Identifikator verschlüsselt an den Download-Server oder an die Vorrichtung zu senden, wobei durch den ersten Identifikator die Vorrichtung eindeutig identifizierbar ist, wobei aufgrund der Aktionsanfrage folgende Schritte durchgeführt werden:
- Ermittlung eines zum Zeitpunkt der Aktionsanfrage aktuell gültigen zweiten hardwarespezifischen Identifikators der netzwerkfähigen Vorrichtung,
- verschlüsselte Übermittlung des zweiten hardwarespezifischen Identifikators an den Download-Server oder an die Vorrichtung,
- Durchführung eines zweiten Abgleichs, wobei der zweite Abgleich einen Vergleich des ersten hardwarespezifischen Identifikators mit dem zweiten hardwarespezifischen Identifikators umfasst,
- Zulassen des Downloads und/oder des Betriebs der ersten Software durch den Download-Server und/oder durch die Vorrichtung, im Falle, dass der zweite Abgleich eine Übereinstimmung ergibt zwischen dem ersten und zweiten hardwarespezifischen Identifikator,
- Abbruch des Downloads und/oder des Betriebs der ersten Software durch den Download-Server und/oder durch die Vorrichtung, im Falle, dass der zweite Abgleich keine Übereinstimmung ergibt zwischen dem ersten und zweiten hardwarespezifischen Identifikator.

Dies kann den Vorteil haben, dass sichergestellt wird, dass die den Download der ersten Software anfordernde Vorrichtung und/oder die Vorrichtung, auf der die erste Software betrieben werden soll, identisch ist mit der Vorrichtung, welche mit dem Mobilfunkgerät verbunden ist und sich nach Auswertung der vom Mobilfunkgerät empfangbaren Mobilfunknetze in einem erlaubten oder nicht erlaubten Land befindet.

Ein Abgleich des zum Zeitpunkt der Berechtigungsanfrage gültigen ersten hardwarespezifischen Identifikators der netzwerkfähigen Vorrichtung, welche mit dem Mobilfunkgerät verbunden ist, mit dem zum Zeitpunkt der Aktionsanfrage aktuell gültigen zweiten hardwarespezifischen Identifikator der netzwerkfähigen Vorrichtung, welche den Download der ersten Software anfordert und/oder auf welcher die erste Software betrieben werden soll, ermöglicht eine Feststellung, ob es sich jeweils um dieselbe Vorrichtung handelt und ob sich die Vorrichtung in einem erlaubten oder nicht erlaubten Land befindet. Eine Verifikation des Standorts der Vorrichtung wird somit ermöglicht. Es kann sichergestellt werden, dass der Download und/oder der Betrieb der ersten Software nur auf eine Vorrichtung erfolgen kann, deren Standort als eindeutig zulässig verifiziert wurde.

Bei dem hardwarespezifischen Identifikator könnte es sich z.B. um eine MAC-Adresse, eine Prozessor-Nummer, eine Seriennummer einer Hardware-Komponente oder einen sonstigen andersartigen spezifischen, einer eindeutigen Identifikation dienenden technische Parameter handeln. So könnte z.B. ein sicherer MAC-Adressen-gesicherter Download der ersten Software via https://- oder ein FTP-Transfer an die ermittelte MAC-Adresse ermöglicht werden. Ebenso könnte z.B. durch einen Abgleich eines eindeutigen Fingerprints der Vorrichtung in Form z.B. der MAC-Adresse und/oder in Form von ähnlichen eindeutig zuordnenbaren technischen Daten der Vorrichtung ein Download der ersten Software ausschließlich auf diejenige Vorrichtung eingeschränkt werden, deren Standort vorher eindeutig als zulässig verifiziert wurde. Ebenso kann mittels eindeutig zuordnenbarer hardware spezifischer Identifikatoren der Betrieb ausschließlich auf derjenigen Vorrichtung zugelassen werden, deren Standort zuvor als zulässig verifiziert wurde. Exportkontrollrechtliche Vorschriften hinsichtlich einer Bestimmung, welche Länder welche Software downloaden und betreiben, können somit eingehalten werden.

Nach einer Ausführungsform der Erfindung ist die zweite Software dazu ausgebildet, die Verschlüsselung durchzuführen.

Dies kann den Vorteil haben, dass die Information über die empfangbaren Mobilfunknetze und die Informationen über die hardwarespezifische Adresse oder über die hardwarespezifischen Identifikator fälschungssicher und unlesbar für andere Empfangsgeräte übertragen wird. Der Sicherheitsgrad der empfangenen Information wird somit wesentlich erhöht. Illegale Manipulationsversuche können dadurch weitgehend erfolgreich abgewendet werden.

Nach einer Ausführungsform der Erfindung ist die Vorrichtung oder der Download-Server dazu ausgebildet,
- die erste Information von der zweiten Software zu empfangen, den ersten Abgleich vorzunehmen und daraufhin den Download und/oder den Betrieb der ersten Software zuzulassen und abzubrechen und/oder
- den zum Zeitpunkt der Berechtigungsanfrage gültigen ersten hardwarespezifischen Identifikator der netzwerkfähigen Vorrichtung und den zum Zeitpunkt der Aktionsanfrage aktuell gültigen zweiten hardwarespezifischen Identifikators der netzwerkfähigen Vorrichtung von der zweiten Software zu empfangen, den zweiten Abgleich vorzunehmen und daraufhin den Download und/oder den Betrieb der ersten Software zuzulassen und abzubrechen.

Dies kann den Vorteil haben, dass hinsichtlich einer Konfiguration und Installation des hier beschriebenen Verfahrens Variationsmöglichkeiten bestehen. Nach einer Ausführungsform der Erfindung kann das Verfahren auf einem Download-Server implementiert sein und dort durchgeführt werden. Nach einer anderen Ausführungsform der Erfindung kann das Verfahren in der Vorrichtung selbst implementiert und dort durchgeführt werden. Die Implementierung und Durchführung des hier beschriebenen Verfahrens kann somit an den jeweiligen Bedarf angepasst werden.

Nach einer Ausführungsform der Erfindung umfasst die Vorrichtung ferner eine speicherprogrammierbare Steuerung, wobei die Durchführung des Verfahrens der standortbasierten Kontrolle durch Steuerbefehle für den Betrieb der speicherprogrammierbaren Steuerung getriggert wird.

Dies kann den Vorteil haben, dass z.B. bei Inbetriebsetzung einer Automatisierungsanlage eine standortbasierte Kontrolle durchgeführt wird, um zu überprüfen, ob auf der jeweiligen Automatisierungsanlage an einem bestimmten Standort eine dort installierte Software legal betrieben wird. Auch bei einer Anforderung eines Downloads z.B. einer Engineering Software zur Aktualisierung einer Software auf einer speicherprogrammierten Steuerung einer Automatisierungsanlage erfolgt eine standortbasierte Kontrolle, ob der angeforderte Download der Engineering-Software von einer SPS erfolgt, die sich in einem zulässigen Staat oder einer zulässigen geografischen Region befindet. Durch die Triggerung der standortbasierten Kontrolle durch Steuerbefehle, z.B. für eine SPS, wird z.B. der Fall verhindert, dass eine Engineering Software für eine Automatisierungsanlage zuerst auf z.B. ein Programmiergerät oder einen Laptop für eine Projektierung einer Automatisierungsanlage in einem zulässigen Staat heruntergeladen wird und dann das Programmiergerät oder das Laptop der bereits herunter geladenen Engineering Software in einen nicht zulässigen Staat oder in eine nicht zulässige geografische Region transferiert wird. Es wird weiterhin vermieden, dass dort von dem Programmiergerät oder dem Laptop die Engineering Software auf eine speicherprogrammierbare Steuerung einer Automatisierungsanlage zu transferiert wird, welche sich in einer nicht zulässigen Region befindet.

Nach einer Ausführungsform der Erfindung wird das Verfahren der standortbasierten Kontrolle zeitlich periodisch wiederholt.

Dies kann den Vorteil haben, dass mittels der standortbasierten Kontrolle ausgeschlossen wird, dass z.B. ein Download einer Software in einem zulässigen Staat oder in einer zulässigen geografischen Region auf eine Vorrichtung stattfindet und diese Vorrichtung dann in einem nicht zulässigen Staat oder in eine nicht zulässige geografische Region transportiert wird. Die zeitliche oder periodische Wiederholung der standortbasierten Kontrolle reduziert Umgehungsmöglichkeiten einer exportkontrollrechtlichen Kontrolle und gewährleistet eine höhere Sicherheit eines legalen Bezugs von Software und eines legalen Betreibens von Software.

Nach einer Ausführungsform der Erfindung ist die zweite Software ferner dazu ausgebildet, zweite Informationen über die Steuerbefehle zu empfangen und die Durchführung des Verfahrens der standortbasierten Kontrolle anhand der zweiten Informationen zu triggern.

Dies kann den Vorteil haben, dass durch die zweite Software gewährleistet ist, dass eine ständige Überwachung von abgesetzten Steuerbefehlen z.B. zur Inbetriebsetzung einer Automatisierungsanlage oder in der Anforderung eines Downloads gewährleistet ist. Das Verfahren zur standortbasierten Kontrolle erfolgt somit bedarfsorientiert und wird nur dann durchgeführt, wenn relevante Aktionen auf der Vorrichtung stattfinden, die exportorientierte Regulationen betreffen könnten.

Nach einer Ausführungsform der Erfindung ist die zweite Software ferner dazu ausgebildet, die zeitlich periodisch wiederholte Durchführung des Verfahrens der standortbasierten Kontrolle zu triggern.

Dies kann den Vorteil haben, dass eine potenzielle Bewegung der Vorrichtung oder einer SPS im zeitlichen Verlauf nachverfolgt werden könnte. Illegale Manipulationsversuche durch einen Zeitablauf erfolgende Standortveränderung eines Downloadziels oder einer Inbetriebnahme einer Software können dadurch effektiv verhindert werden. Die Gewissheit, dass das Downloadziel bzw. der Ort des Betreibens einer Software sich in einem zulässigen Staat oder in einer zulässigen geografischen Region befindet, wird dadurch signifikant erhöht.

In einem weiteren Aspekt betrifft die Erfindung ein System zur standortbasierten Kontrolle eines Standorts eines Downloads und/oder eines Betriebs einer ersten Software auf einer Vorrichtung, wobei die Vorrichtung dazu ausgebildet ist, eine erste Software durch den Download von einem Download-Server zu empfangen und/oder die erste Software zu betreiben, wobei ein Mobilfunkgerät mit der Vorrichtung verbunden ist, wobei das System zur Durchführung folgender Verfahrensschritte ausgebildet ist:
- Ermittlung mindestens eines Mobilfunknetzes, welches von einem aktuellen Standort des Mobilfunkgeräts empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software durch den Download-Server und/oder durch die Vorrichtung, im Falle, dass der erste Abgleich ergibt, dass der aktuelle Standort des Mobilfunkgeräts mit einem Soll-Standort der Menge von Soll-Standorten übereinstimmt,
- Abbruch des Downloads und/oder des Betriebs der ersten Software durch den Download-Server und/oder durch die Vorrichtung, im Falle, dass der erste Abgleich ergibt, dass der aktuelle Standort des Mobilfunkgeräts von der Menge der Soll-Standorte abweicht.

In einem weiteren Aspekt betrifft die Erfindung ein Verfahren geschaffen zur standortbasierten Kontrolle eines Standorts eines Downloads und/oder eines Betriebs einer ersten Software auf einer Vorrichtung, wobei die Vorrichtung dazu ausgebildet ist, die erste Software durch den Download von einem Download-Server zu empfangen und/oder die erste Software zu betreiben, wobei ein Mobilfunkgerät mit der Vorrichtung verbunden ist, wobei das durch die Vorrichtung ausgeführte Verfahren umfasst:
- Empfang mindestens eines Mobilfunknetzes, welches von einem aktuellen Standort des Mobilfunkgeräts empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts mit einem Soll-Standort der Menge von Soll-Standorten übereinstimmt,
- Abbruch des Downloads und/oder des Betriebs der ersten Software im Falle, dass der erste Abgleich ergibt, dass der aktuelle Standort des Mobilfunkgeräts von der Menge der Soll-Standorte abweicht.

In einem weiteren Aspekt betrifft die Erfindung eine Vorrichtung, wobei die Vorrichtung zur standortbasierten Kontrolle eines Standorts eines Downloads- und/oder eines Betriebs einer ersten Software auf der Vorrichtung ausgebildet ist, wobei die Vorrichtung dazu ausgebildet ist, die erste Software durch den Download von einem Download-Server zu empfangen und/oder die erste Software zu betreiben, wobei ein Mobilfunkgerät mit der Vorrichtung verbunden ist, wobei die Vorrichtung zur Durchführung folgender Verfahrensschritte ausgebildet ist:
- Empfang mindestens eines Mobilfunknetzes, welches von einem aktuellen Standort des Mobilfunkgeräts empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts mit einem Soll-Standort der Menge von Soll-Standorten übereinstimmt,
- Abbruch des Downloads- und/oder des Betriebs der ersten Software im Falle, dass der erste Abgleich ergibt, dass der aktuelle Standort des Mobilfunkgeräts von der Menge der Soll-Standorte abweicht.

In einem weiteren Aspekt betrifft die Erfindung ein Verfahren zur standortbasierten Kontrolle eines Standortes eines Downloads einer ersten Software einer Vorrichtung und/oder eines Betriebs der ersten Software auf der Vorrichtung geschaffen, wobei der Download-Server dazu ausgebildet ist, die erste Software der Vorrichtung für einen Download zur Verfügung zu stellen und/oder den Betrieb der ersten Software zu kontrollieren, wobei das durch den Download-Server ausgeführte Verfahren umfasst:
- Empfang mindestens eines Mobilfunknetzes von einem mit der Vorrichtung verbundenen Mobilfunkgerät, wobei das Mobilfunknetz von einem aktuellen Standort des Mobilfunkgeräts empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts mit einem Soll-Standort der Menge von Soll-Standorten übereinstimmt, und
- Abruf des Downloads und/oder des Betriebs der ersten Software, im Falle, dass der erste Abgleich ergibt, dass der aktuelle Standort des Mobilfunkgeräts von der Menge der Soll-Standorte abweicht.

In einem weiteren Aspekt betrifft die Erfindung einen Download-Server, wobei der Download-Server zur standortbasierten Kontrolle eines Standorts eines Downloads einer ersten Software und einer Vorrichtung und/oder eines Betriebs der ersten Software auf der Vorrichtung, wobei der Download-Server dazu ausgebildet ist, die erste Software der Vorrichtung für einen Download bereitzustellen, und/oder den Betrieb der ersten Software zu kontrollieren, wobei ein Mobilfunkgerät mit der Vorrichtung verbunden ist, wobei die Vorrichtung zur Durchführung folgender Verfahrensschritte ausgebildet ist:
- Empfang mindestens eines Mobilfunknetzes, welches von einem aktuellen Standort-Mobilfunkgerät empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts mit einem Soll-Standort der Menge von Soll-Standorten übereinstimmt,
- Abruf des Downloads und/oder des Betriebs der ersten Software im Falle, dass der erste Abgleich ergibt, dass der aktuelle Standort des Mobilfunkgeräts von der Menge der Soll-Standorte abweicht.

In einem weiteren Aspekt betrifft die Erfindung ein Computerprogrammprodukt mit von einem Prozessor ausführbaren Instruktionen zur Durchführung des obig beschriebenen Verfahrens.

Im Folgenden werden bevorzugte Ausführungsformen der Erfindung anhand der vorgenannten Zeichnungen näher erläutert.

Es zeigen:
- FIG 1: Blockdiagramm zur Veranschaulichung eines Downloads und Betriebs einer ersten Software auf einer Vorrichtung,
- FIG 2: Blockdiagramm zur Veranschaulichung eines ortsabhängigen Anlaufs und Betriebs einer speicherprogrammierbaren Steuerung,
- FIG 3: Blockdiagramm zur Veranschaulichung eines ortsabhängigen Anlaufs bzw. Betriebs der speicherprogrammierbaren Steuerung und Download der ersten Software auf die speicherprogrammierbare Steuerung,
- FIG 4: Blockdiagramm zur Veranschaulichung eines ortsabhängigen Downloads und Betriebs der ersten Software auf die Vorrichtung und ortsabhängiger Download der ersten Software auf die speicherprogrammierbare Steuerung,
- FIG 5: Beziehungsdiagramm zur Veranschaulichung der Verfahrensschritte aus Figur 1.

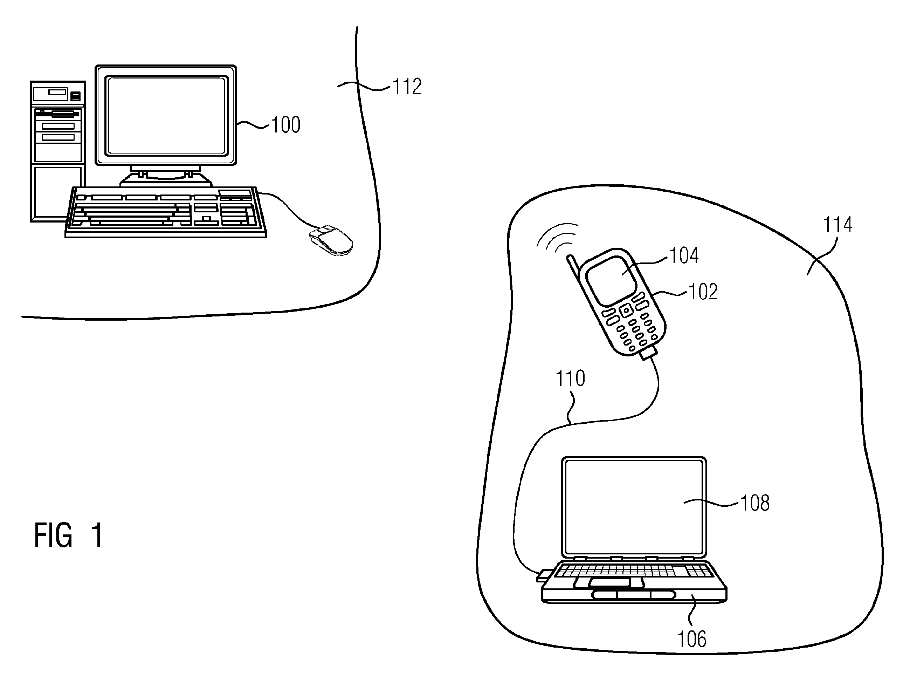

Die FIG 1 zeigt den Fall eines Downloads und eines Betriebs einer ersten Software auf einer Vorrichtung 106. Die Vorrichtung 106 könnte z.B. als ein Programmiergerät oder ein Laptop für eine Projektierung, für eine Inbetriebnahme, für einen Service und/oder für eine Wartung einer Automatisierungsanlage ausgebildet sein. Bei der ersten Software könnte es sich beispielsweise um eine Engineering Software, Lizenzen, Service Packs, Hotfixes, Updates oder Ähnlichem handeln.

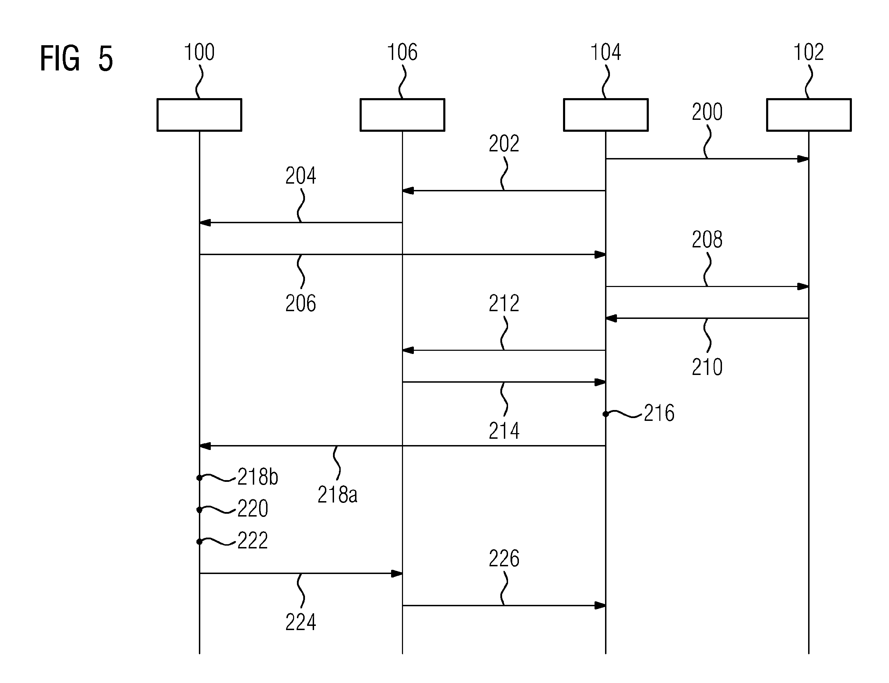

Hierbei wird das Mobilfunkgerät zunächst an die Vorrichtung 106 angeschlossen. Eine zweite Software 104, z.B. ein Applet, welches über Internet, einen App Store oder von einem PC bezogen wurde, wird in Schritt 200 auf das Mobilfunkgerät 102 übertragen und dort installiert. Die Verfahrensschritte werden in FIG 5 dargestellt.

Das Mobilfunkgerät 102 wird im Verfahrensschritt 202 mit der Vorrichtung 106 verbunden. In Schritt 208 fragt die zweite Software 104 z.B. das Applet, die aktuell vom Mobilfunkgerät 102 empfangbaren Mobilfunknetze ab. Die Ermittlung der aktuell vom Mobilfunkgerät 102 empfangbaren Mobilfunknetze erfolgt in Verfahrensschritt 210.

In Schritt 212 fordert die zweite Software 104 eine Information über einen zum Zeitpunkt der Berechtigungsanfrage gültigen ersten hardwarespezifischen Identifikator, z.B. die MAC-Adresse, der Vorrichtung 106 an. Die Ermittlung des zum Zeitpunkt der Berechtigungsanfrage gültigen ersten hardwarespezifischen Identifikators erfolgt in Schritt 214 durch die zweite Software 104. Diese verschlüsselt die erste Information bezüglich der empfangbaren Mobilfunknetze und die Information bezüglich des zum Zeitpunkt einer Berechtigungsanfrage gültigen ersten hardwarespezifischen Identifikators im Verfahrensschritt 216. Diese zusammengesetzte und verschlüsselte Information wird dann im Schritt 218a an den Download-Server 100 gesendet.

Von der Vorrichtung 106 ausgehend wird ein Download einer ersten Software 108 im Verfahrensschritt 204 als Aktionsanfrage angefordert. Die zweite Software 104, z.B. das Applet, registriert im Verfahrensschritt 206 einen Steuerbefehl zum Download und ordnet dieser Kommunikation eine eindeutige ID zu.

Im Download-Server 100 werden die empfangene erste und die Information bezüglich des zum Zeitpunkt der Berechtigungsanfrage gültigen ersten hardwarespezifischen Identifikators im Schritt 218b entschlüsselt und ausgelesen. Im Download-Server 100 erfolgt im Verfahrensschritt 220 ein erster Abgleich der empfangbaren Mobilfunknetze mit vordefinierten Soll-Mobilfunknetzen. In Schritt 222 erfolgt im Download-Server 100 ein zweiter Abgleich des zum Zeitpunkt der Berechtigungsanfrage gültigen ersten hardwarespezifischen Identifikators der netzwerkfähigen Vorrichtung, welche mit dem Mobilfunkgerät verbunden ist, mit dem zum Zeitpunkt der Aktionsanfrage aktuell gültigen zweiten hardwarespezifischen Identifikator der netzwerkfähigen Vorrichtung, welche den Download der ersten Software anfordert und/oder auf welcher die erste Software betrieben werden soll. Es erfolgt somit im zweiten Abgleich eine Feststellung, ob es sich jeweils um dieselbe Vorrichtung handelt und im ersten Abgleich ob sich diese Vorrichtung in einem erlaubten oder nicht erlaubten Land befindet.

Hintergrund dieser Einschränkung des Downloads und des Betriebs der ersten Software auf ausschließlich diese eine netzwerkfähige Vorrichtung ist, dass die erste Software aus exportkontrollrechtlichen Gründen nur auf genau dieser Vorrichtung und keiner anderen herunter geladen und betrieben werden darf. Denn eine andere Vorrichtung, deren Standort nicht überprüft wurde, könnte sich in einem unzulässigen Land befinden.

Die authentifizierte netzwerkfähige Vorrichtung zeichnet sich dadurch aus, dass deren aktueller Standort zuvor zuverlässlich ermittelt und als zulässig verifiziert wurde, im Gegensatz zu jeder anderen weiteren netzwerkfähigen Vorrichtung, für die entweder keine Standortbestimmung durchgeführt wurde oder deren Standortüberprüfung einen nicht zulässigen Standort ergab.

Dabei ergeben sich die zulässigen Staaten bzw. zulässigen geografischen Regionen aus staatlich vorgegebenen exportkontrollrechtlichen Regulationen.

Im Verfahrensschritt 224 erfolgt entweder die Freigabe eines Freigabecodes zum Zulassen des Downloads der ersten Software 108 vom Download-Server, im Falle, dass der erste Abgleich ergab, dass der identifizierte Standort einem exportkontrollrechtlich zugelassenen Standort entspricht, und der zweite Abgleich ergab, dass der zum Zeitpunkt der Berechtigungsanfrage ermittelte erste hardwarespezifische Identifikator der netzwerkfähigen Vorrichtung 106 mit dem zum Zeitpunkt der Aktionsanfrage ermittelten zweiten hardwarespezifischen Identifikator der netzwerkfähigen Vorrichtung 106 identisch ist. Sollte dies nicht der Fall sein, erfolgt im Verfahrensschritt 224 ein Abbruch des Downloadprozesses. Die zweite Software 104 registriert im Verfahrensschritt 226 den entsprechenden Steuerbefehl und ordnet diese Kommunikation einer eindeutigen ID zu.

Die Verbindung zwischen dem Mobilfunkgerät 102 und der Vorrichtung 106 kann entweder über ein Kabel 110 oder kabellos, z.B. über Bluetooth, erfolgen.

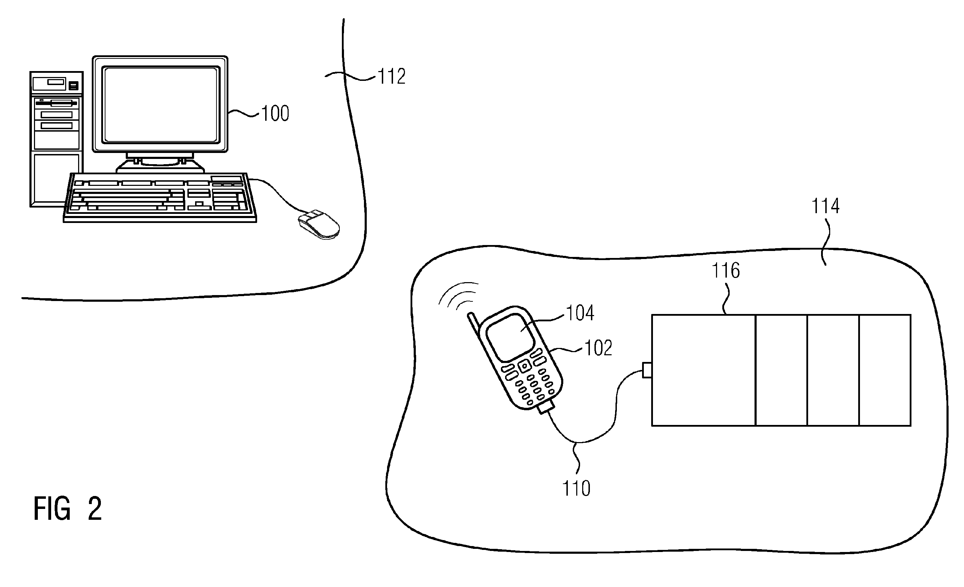

Die FIG 2 zeigt den Fall eines ortsabhängigen Anlaufs bzw. Betriebs der speicherprogrammierbaren Steuerung für eine Inbetriebsetzung z.B. einer Automatisierungsanlage. Dazu wird das Mobilfunkgerät 102 zunächst an eine speicherprogrammierbare Steuerung 116, z.B. einer Automatisierungsanlage, angeschlossen. Die zweite Softwareeinheit 4, z.B. ein Applet, welches über Internet, von einem App Store oder von einer speicherprogrammierbaren Steuerung übertragen wurde, wird auf dem Mobilfunkgerät 102 installiert. Dann wird der Ablauf der speicherprogrammierbaren Steuerung 116 gestartet, z.B. durch Einschalten eines Netzes, beispielsweise durch eine Stop-Run-Bedienung.

Die zweite Software 104 ermittelt die aktuell vom Mobilfunkgerät 102 empfangbaren Mobilfunknetze. Die zweite Software 104 überträgt dann die erste Informationen bezüglich der aktuell vom Mobilfunkgerät 102 empfangbaren Mobilfunknetze über Internet vom Mobilfunkgerät 102 oder der speicherprogrammierbaren Steuerung 116 ausgehend zum Download-Server 100. Dieser nimmt nun im ersten Abgleich eine Prüfung des Standorts der speicherprogrammierbaren Steuerung 116 anhand der von der zweiten Software 104 übertragenen Mobilfunknetze vor, wobei die speicherprogrammierbaren Steuerung 116 mit dem Mobilfunkgerät 102 verbunden ist. In Schritt 222 der FIG 5 erfolgt der zweite Abgleich des zum Zeitpunkt der Berechtigungsanfrage gültigen ersten hardwarespezifischen Identifikators der speicherprogrammierbaren Steuerung 116, welche mit dem Mobilfunkgerät verbunden ist, mit dem zum Zeitpunkt der Aktionsanfrage aktuell gültigen zweiten hardwarespezifischen Identifikator der speicherprogrammierbaren Steuerung 116, auf welcher die erste Software betrieben werden soll. Es erfolgt im zweiten Abgleich eine Feststellung, ob es sich jeweils um dieselbe speicherprogrammierbaren Steuerung 116 handelt und im ersten Abgleich, ob sich diese Vorrichtung in einem erlaubten oder nicht erlaubten Land befindet.

Ergab der erste Abgleich, dass der identifizierte Standort einem exportkontrollrechtlich zugelassenen Standort entspricht, und der zweite Abgleich, dass der zum Zeitpunkt der Berechtigungsanfrage ermittelte erste hardwarespezifische Identifikator der speicherprogrammierbaren Steuerung 116 mit dem zum Zeitpunkt der Aktionsanfrage ermittelten zweiten hardwarespezifischen Identifikator der speicherprogrammierbaren Steuerung 116 identisch ist, so erteilt der Download-Server 100 mittels Übersendung eines Freischalt-Codes an die zweite Software 104 dem Mobilfunkgerät 102 eine Freigabe für den Anlauf bzw. Start der speicherprogrammierbaren Steuerung 116.

Wenn ein Freischalt-Code an die zweite Software 104 auf Mobilfunkgerät 102 gesendet wurde, wird dieser über dieselbe zweite Software 104 im Mobilfunkgerät 102 an ein Programm in der speicherprogrammierbaren Steuerung 116 übertragen. In der speicherprogrammierbaren Steuerung 116 wird dann entschieden, ob sie z.B. anlaufen darf.

In einer alternativen Ausführungsform der Erfindung ist das Mobilfunkgerät 102 ebenfalls mit der speicherprogrammierbaren Steuerung 116, beispielsweise über ein Kabel 110, verbunden. Vor einer Inbetriebsetzung, z.B. einer Automatisierungsanlagen, oder bei einem Stop-Run-Übergang liest die speicherprogrammierbare Steuerung 116 mittels eines speicherprogrammierbaren steuerungspezifischen Programms über die zweite Software 104 im Mobilfunkgerät 102 die aktuell empfangbaren Mobilfunknetze aus und entscheidet dann auf der Basis empfangbaren Mobilfunknetze, ob die speicherprogrammierbare Steuerung 116 anlaufen darf oder nicht. So wird sichergestellt, dass eine Automatisierungsanlage nur in einem zulässigen Land oder in einer zulässigen geografischen Region in Betrieb gesetzt wird.

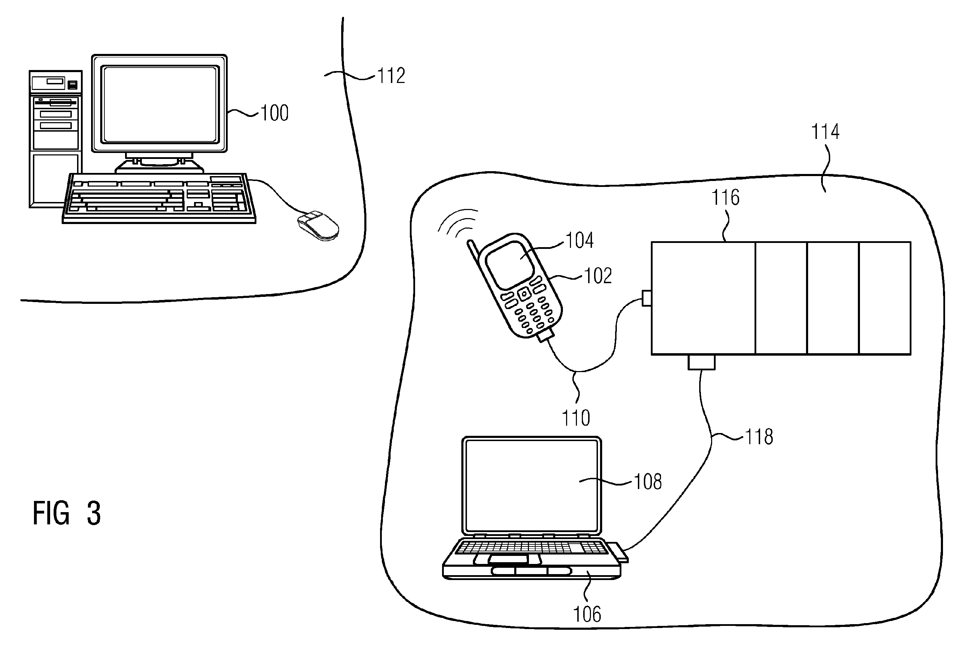

Die FIG 3 zeigt den Fall eines ortsabhängigen Anlaufs bzw. Betriebs einer speicherprogrammierbaren Steuerung 116 und eines ES-Projekt-Downloads von der Vorrichtung 106, z. B. einem Programmiergerät oder einem Laptop für eine Projektierung, für eine Inbetriebnahme, für einen Service und/oder für eine Wartung einer Automatisierungsanlage, auf eine speicherprogrammierbare Steuerung 116, z.B. einer Automatisierungsanlage. Dabei steht ES für Engineering Software.

In diesem Fall wird das Mobilfunkgerät 102 zunächst an eine speicherprogrammierbare Steuerung 116, z.B. einer Automatisierungsanlage, angeschlossen. Die zweite Software 104, z.B. ein Applet, welches über Internet, einen App Store oder von einer speicherprogrammierbaren Steuerung 116 übertragen wurde, wird auf dem Mobilfunkgerät 102 installiert. Dann wird der Download einer Engineering-Software von z.B. dem Programmiergerät oder Laptop auf die speicherprogrammierbare Steuerung 116, z.B. einer Automatisierungsanlage, durchgeführt. Alternativ kann hier auch im Programmiergerät und/oder Laptop 106, auf dem die Engineering Software 108 installiert ist, eine Auswertung der empfangbaren Mobilfunknetze vorgenommen werden. Es wird auf jeden Fall sichergestellt, dass z.B. eine bestimmte Automatisierungslösung nur in zulässigen Ländern projektiert werden darf.

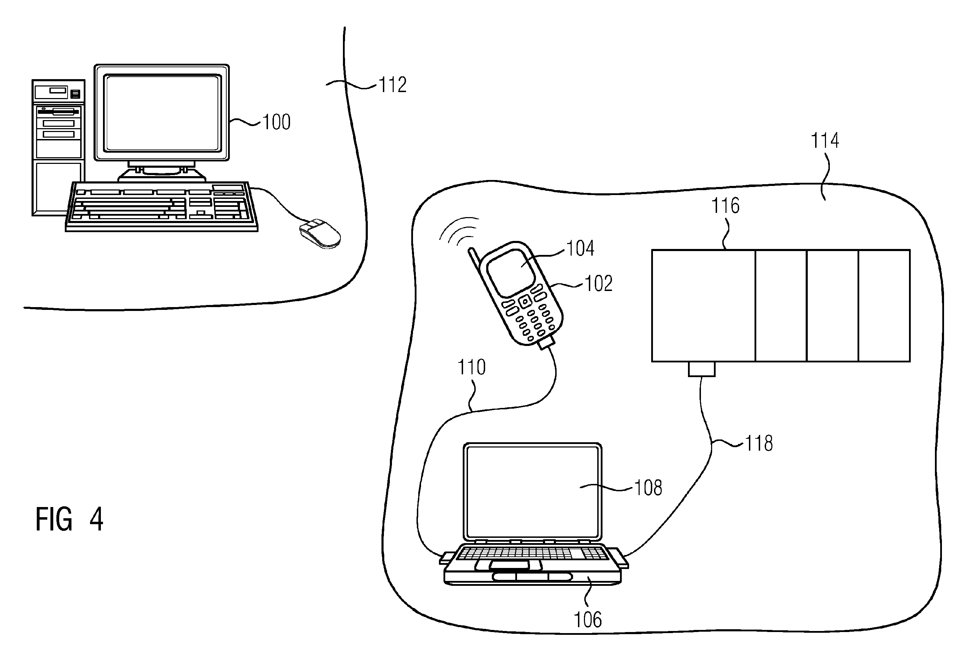

Die FIG 4 zeigt eine Ausführungsform, bei der das Mobilfunkgerät 102 und die Vorrichtung 106 angeschlossen wird, welche mit einer speicherprogrammierbaren Steuerung 116, z.B. einer Automatisierungsanlage, verbunden ist. Demonstriert wird somit der Fall eines ortsabhängigen Downloads und Betriebs von Engineering Software 108 auf die Vorrichtung 106, die z.B. ein Programmiergerät oder einen Laptop für eine Projektierung, für eine Inbetriebnahme, für einen Service und/oder für eine Wartung einer Automatisierungsanlage und eines ortsabhängigen ES-Projekt-Downloads auf eine speicherprogrammierbare Steuerung 116, z.B. eine Automatisierungsanlage, sein kann.

Dazu wird das Mobilfunkgerät 102 an die Vorrichtung 106 angeschlossen. Die zweite Software 104, z.B. das Applet, wird auf dem Mobilfunkgerät 102 installiert. Dann wird der Download einer Engineering Software 108 von der Vorrichtung 106 auf die speicherprogrammierbare Steuerung 116 mittels eines Datenübertragungskabels 118 gestartet. Die zweite Software 104, z.B. das Applet, überträgt die Liste mit aktuell empfangbaren Mobilfunknetzen verschlüsselt an die Vorrichtung 106. Dieses nimmt nun eine Prüfung des Standorts anhand der von der zweiten Software 104 übertragenen Mobilfunkliste vor. Weist die Liste der empfangbaren Mobilfunknetze nur zulässige Mobilfunknetze auf, so wird der Download des ES-Projekts von der Vorrichtung 106 auf die speicherprogrammierbare Steuerung 116, z.B. einer Automatisierungsanlage, durchgeführt.

Über die von der zweiten Software 104 ermittelten Mobilfunknetze, die das Mobilfunkgerät 102 empfangen kann, wird somit in der Vorrichtung 106 entschieden, ob der Download des ES-Projekts von der Vorrichtung 106 auf die speicherprogrammierbare Steuerung 116 zugelassen wird oder nicht. Dadurch wird sichergestellt, dass z.B. eine bestimmte Automatisierungslösung nur in zulässigen Ländern projektiert werden darf.

Dabei wird sämtliche stattfindende Kommunikation verschlüsselt übertragen, damit eine schädigende Manipulation ausgeschlossen werden kann. Auch das Programm auf der speicherprogrammierbaren Steuerung 116 muss z.B. über einen Know-How-Schutz vor unberechtigtem Zugriff und/oder schädigenden Manipulationsversuchen geschützt werden.

Das Mobilfunkgerät 102 lässt sich z.B. über ein vom Hersteller mitgeliefertes Kabel 110 oder über eine kabellose Nahfeldkommunikation, z.B. Bluetooth, über eine Standard-Schnittstelle wie USB, Bluetooth, Wi-Fi oder andere, kabelgebunden oder kabellos datentechnisch verbinden. Alternativ könnte das Mobilfunkgerät 102 auch in der speicherprogrammierbaren Steuerung 116 direkt oder in einem Kommunikationsprozessor integriert sein.

Die auf dem Mobilfunk installierte Software, z.B. ein Applet, besitzt eine Funktionalität zur Verschlüsselung einer Kommunikation. Für eine Ver- und Entschlüsselung von Telegramm und/oder Datensätzen könnte das Applet geeignete, dem jeweiligen Stand der Technik entsprechende und zugelassene symmetrische oder asymmetrische Standard-Datenverschlüsselungsverfahren, z.B. RSA-Kryptographie, "Public-Key" Verfahren, verwenden. Das Applet könnte die Kommunikation zwischen dem Mobilfunkgerät und der Vorrichtung, z.B. ein Computer-Endgerät, die Kommunikation zwischen Mobilfunkgerät und speicherprogrammierbaren Steuerung sowie auch die Internetverbindung zum Download-Server selbst verschlüsseln.

Die auf dem Mobilfunkgerät 102 installierte zweite Software 104, hat im Wesentlichen folgende Funktionen:
- Sicherstellung, dass ein Bezug bzw. Erwerb von Software durch einen Download aus dem Internet nur in zulässigen Ländern/Orten/Regionen durchführbar ist,
- Prüfung, ob das Betreiben einer Software am jeweiligen Ort zulässig ist, mit dem Ziel, das Betreiben von Software in einem unzulässigen Ort zu unterbinden
- Sicherstellung dass eine Automatisierungslösung nur in einem Automatisierungs-System projiziert werden darf, welches sich an einem zulässigen Ort befindet,
- Sicherstellung, dass eine Automatisierungslösung nur in Automatisierungssystemen in Betrieb genommen werden kann, z.B. durch Steuerung eines Stopp-Run-Übergangs, welche sich jeweils an einem zulässigen Ort befinden.

Die zweite Software 104 besitzt darüber hinaus die Fähigkeit, einzelne Informationen zusammenzusetzen, zu verschlüsseln und zu versenden.

Ausführungsformen der Erfindung ermöglichen eine standortbasierte Kontrolle des Downloads und/oder des Betriebs für jede beliebige Art von Software, also auch Firmware. Die standortbasierte Kontrolle ist nicht nur bei einem Internet-Download von Software-Vollversionen möglich, sondern auch beim Download von Service-Packs und/oder Hotfixes.

Ausführungsformen der Erfindung ermöglichen, dass eine Software, z.B. eine Engineering-Software für eine Automatisierungsanlage, ohne Verzögerung durch Lieferzeiten und ohne manuelle Logistik bezogen werden kann. Aufwände für Auslieferung von Datenträgern, deren Produktion, Verpackung, Lagerhaltung, Versand etc. würden entfallen, da Software per Download unter Einhaltung exportrechtlicher Einschränkungen weltweit zur Verfügung gestellt werden könnte.

Ausführungsformen der Erfindung ermöglichen eine Verwaltung von Pflege von exportkontrollrechtlichen Vorschriften in einer Datenbank. Somit können bei möglichen Änderungen von exportkontrollrechtlichen Vorschriften Aktualisierungen von Länderlisten sehr zeitnah und komfortabel durchgeführt werden, indem z.B. bei Updates der zu überwachenden Software die darin enthaltenen hardcodierten Länderlisten angepasst werden. Gegebenenfalls wäre nach einem aktualisierten Update mit geänderter Länderliste in dem Land, das neuerdings zu den exportkontrollrechtlichen eingeschränkten Ländern gehört, die zugehörige Software nicht mehr lauffähig. Ausführungsformen der Erfindung ermöglichen somit eine Regelung, in welchem Land z.B. eine Automatisierungslösung für eine speicherprogrammierbare Steuerung lauffähig ist und in welchem nicht.

Ausführungsformen der Erfindung liefern gleichzeitig automatisch und nahezu ohne Zusatzaufwand eine ländergranulare Software-Downloadliste für Soll-Export-Nachweise (z.B. auf dem Download-Server).

Ausführungsformen der Erfindung beschränken sich nicht nur auf die Identifizierung von aktuell betriebenen Mobilfunknetzen, sondern umfassen auch zukünftige neu zu konzipierende Mobilfunknetze. Zudem könnten länderspezifisch bezüglich der Aktion wie z.B. Download einer Engineering Software oder Internet oder die Inbetriebsetzung einer speicherprogrammierbaren Steuerung eine Automatisierungsanlageneinschränkung oder -zulassungen auf vorteilhafte Weise definiert werden.

## Patentansprüche

1. Computer-implementiertes Verfahren zur standortbasierten Kontrolle eines Standorts eines Downloads und/oder eines Betriebs einer ersten Software (108) auf einer Vorrichtung (106), wobei die Vorrichtung (106) dazu ausgebildet ist, die erste Software (108) durch den Download von einem Download-Server (100) zu empfangen und/oder die erste Software (108) zu betreiben, wobei ein Mobilfunkgerät (102) mit der Vorrichtung (106) verbunden ist, wobei das Verfahren umfasst:
- Ermittlung mindestens eines Mobilfunknetzes, welches von einem aktuellen Standort des Mobilfunkgeräts (102) empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software (108) durch den Download-Server (100) und/oder durch die Vorrichtung (106), im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads und/oder des Betriebs der ersten Software (108) durch den Download-Server (100) und/oder durch die Vorrichtung (106), im Falle, dass der erste Abgleich ergibt, dass der aktuelle Standort des Mobilfunkgeräts (102) von der Menge der Soll-Standorte abweicht.

2. Verfahren nach Anspruch 1, wobei zur Durchführung des ersten Abgleichs eine erste Information über das ermittelte Mobilfunknetz an den Download-Server (100) oder an die Vorrichtung (106) übermittelt wird, wobei die Übermittlung der ersten Information durch das Mobilfunkgerät (102) verschlüsselt erfolgt.

3. Verfahren nach Anspruch 2, wobei die Ermittlung des mindestens einen Mobilfunknetzes und die Durchführung der ersten Abfrage aufgrund einer Berechtigungsanfrage der zweiten Vorrichtung erfolgt, wobei das Verfahren ferner eine Aktionsanfrage zur Durchführung des eigentlichen Downloads und/oder des Betriebs der ersten Software (108) umfasst, wobei die Vorrichtung (106) ferner netzwerkfähig ist, wobei eine zweite Software (104) auf dem Mobilfunkgerät (102) installiert ist, wobei die zweite Software (104) dazu ausgebildet ist, einen zum Zeitpunkt der Berechtigungsanfrage gültigen ersten hardwarespezifischen Identifikator der netzwerkfähigen Vorrichtung (106) zu ermitteln und diesen ersten Identifikator verschlüsselt an den Download-Server (100) oder an die Vorrichtung (106) zu senden, wobei durch den ersten Identifikator die Vorrichtung (106) eindeutig identifizierbar ist, wobei aufgrund der Aktionsanfrage folgende Schritte durchgeführt werden:
- Ermittlung eines zum Zeitpunkt der Aktionsanfrage aktuell gültigen zweiten hardwarespezifischen Identifikators der netzwerkfähigen Vorrichtung (106),
- verschlüsselte Übermittlung des zweiten hardwarespezifischen Identifikators an den Download-Server (100) oder an die Vorrichtung (106),
- Durchführung eines zweiten Abgleichs, wobei der zweite Abgleich einen Vergleich des ersten hardwarespezifischen Identifikators mit dem zweiten hardwarespezifischen Identifikators umfasst,
- Zulassen des Downloads und/oder des Betriebs der ersten Software durch den Download-Server und/oder durch die Vorrichtung, im Falle, dass der zweite Abgleich eine Übereinstimmung ergibt zwischen dem ersten und zweiten hardwarespezifischen Identifikator,
- Abbruch des Downloads und/oder des Betriebs der ersten Software durch den Download-Server und/oder durch die Vorrichtung, im Falle, dass der zweite Abgleich keine Übereinstimmung ergibt zwischen dem ersten und zweiten hardwarespezifischen Identifikator.

4. Verfahren nach Anspruch 3, wobei die zweite Software (104) dazu ausgebildet ist, die Verschlüsselung durchzuführen.

5. Verfahren nach den Ansprüchen 3 bis 4, wobei die Vorrichtung (106) oder der Download-Server (100) dazu ausgebildet ist,
- die erste Information von der zweiten Software zu empfangen, den ersten Abgleich vorzunehmen und daraufhin den Download und/oder den Betrieb der ersten Software (108) zuzulassen und abzubrechen und/oder
- den zum Zeitpunkt der Berechtigungsanfrage gültigen ersten hardwarespezifischen Identifikator der netzwerkfähigen Vorrichtung (106) und den zum Zeitpunkt der Aktionsanfrage aktuell gültigen zweiten hardwarespezifischen Identifikators der netzwerkfähigen Vorrichtung (106) von der zweiten Software zu empfangen, den zweiten Abgleich vorzunehmen und daraufhin den Download und/oder den Betrieb der ersten Software (108) zuzulassen und abzubrechen.

6. Verfahren nach einem der vorhergehenden Ansprüche, wobei die Vorrichtung (106) ferner eine Speicherprogrammierbare Steuerung (116) umfasst, wobei die Durchführung des Verfahrens der standortbasierten Kontrolle durch Steuerbefehle für den Betrieb der Speicherprogrammierbaren Steuerung getriggert wird.

7. Verfahren nach einem der vorhergehenden Ansprüche 1 bis 5, wobei das Verfahren der standortbasierten Kontrolle zeitlich periodisch wiederholt durchgeführt wird.

8. Verfahren nach Anspruch 7, wobei die zweite Software (104) ferner dazu ausgebildet ist, zweite Informationen über die Steuerbefehle zu empfangen und die Durchführung des Verfahrens der standortbasierten Kontrolle anhand der zweiten Informationen zu triggern.

9. Verfahren nach Anspruch 8, wobei die zweite Software (104) ferner dazu ausgebildet ist, die zeitlich periodisch wiederholte Durchführung des Verfahrens der standortbasierten Kontrolle zu triggern.

10. System zur standortbasierten Kontrolle eines Standorts eines Downloads und/oder eines Betriebs einer ersten Software (108) auf einer Vorrichtung (106), wobei die Vorrichtung (106) dazu ausgebildet ist, die erste Software (108) durch den Download von einem Download-Server (100) zu empfangen und/oder die erste Software (108) zu betreiben, wobei ein Mobilfunkgerät (102) mit der Vorrichtung (106) verbunden ist, wobei das System zur Durchführung folgender Verfahrensschritte ausgebildet ist:
- Ermittlung mindestens eines Mobilfunknetzes, welches von einem aktuellen Standort des Mobilfunkgeräts (102) empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software (108) durch den Download-Server (100) und/oder durch die Vorrichtung (106), im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads und/oder des Betriebs der ersten Software (108) durch den Download-Server (100) und/oder durch die Vorrichtung (106), im Falle, dass der erste Abgleich ergibt, dass der aktuelle Standort des Mobilfunkgeräts (102) von der Menge der Soll-Standorte abweicht.

11. Computer-implementiertes Verfahren zur standortbasierten Kontrolle eines Standorts eines Downloads und/oder eines Betriebs einer ersten Software (108) auf einer Vorrichtung (106), wobei die Vorrichtung (106) dazu ausgebildet ist, die erste Software (108) durch den Download von einem Download-Server (100) zu empfangen und/oder die erste Software (108) zu betreiben, wobei ein Mobilfunkgerät (102) mit der Vorrichtung (106) verbunden ist, wobei das durch die Vorrichtung (106) ausgeführte Verfahren umfasst:
- Empfang mindestens eines Mobilfunknetzes, welches von einem aktuellen Standort des Mobilfunkgeräts (102) empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads und/oder des Betriebs der ersten Software (108) im Falle, dass der erste Abgleich ergibt, dass der aktuelle Standort des Mobilfunkgeräts (102) von der Menge der Soll-Standorte abweicht.

12. Vorrichtung (106), wobei die Vorrichtung (106) zur standortbasierten Kontrolle eines Standorts eines Downloads und/oder eines Betriebs einer ersten Software (108) auf der Vorrichtung (106) ausgebildet ist, wobei die Vorrichtung (106) dazu ausgebildet ist, die erste Software (108) durch den Download von einem Download-Server (100) zu empfangen und/oder die erste Software (108) zu betreiben, wobei ein Mobilfunkgerät (102) mit der Vorrichtung (106) verbunden ist, wobei die Vorrichtung (106) zur Durchführung folgender Verfahrensschritte ausgebildet ist:
- Empfang mindestens eines Mobilfunknetzes, welches von einem aktuellen Standort des Mobilfunkgeräts (102) empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads und/oder des Betriebs der ersten Software (108) im Falle, dass der erste Abgleich ergibt, dass der aktuelle Standort des Mobilfunkgeräts (102) von der Menge der Soll-Standorte abweicht.

13. Computer-implementiertes Verfahren zur standortbasierten Kontrolle eines Standorts eines Downloads einer ersten Software (108) auf eine Vorrichtung (106) und/oder eines Betriebs der ersten Software (108) auf der Vorrichtung (106), wobei der Download-Server (100) dazu ausgebildet ist, die erste Software (108) der Vorrichtung (106) für einen Download zur Verfügung zu stellen und/oder den Betrieb der ersten Software (108) zu kontrollieren, wobei das durch den Download-Server (100) ausgeführte Verfahren umfasst:
- Empfang mindestens eines Mobilfunknetzes von einem mit der Vorrichtung (106) verbundenen Mobilfunkgerät (102), wobei das Mobilfunknetz von einem aktuellen Standort des Mobilfunkgeräts (102) empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads und/oder des Betriebs der ersten Software, im Falle, dass der erste Abgleich ergibt, dass der aktuelle Standort des Mobilfunkgeräts (102) von der Menge der Soll-Standorte abweicht.

14. Download-Server (100), wobei der Download-Server (100) zur standortbasierten Kontrolle eines Standorts eines Downloads einer ersten Software (108) auf eine Vorrichtung (106) und/oder eines Betriebs der ersten Software (108)auf der Vorrichtung (106), wobei der Download-Server (100) dazu ausgebildet ist, die erste Software (108) der Vorrichtung (106) für einen Download bereit zu stellen und/oder den Betrieb der ersten Software (108) zu kontrollieren, wobei ein Mobilfunkgerät (102) mit der Vorrichtung (106) verbunden ist, wobei die Vorrichtung (106) zur Durchführung folgender Verfahrensschritte ausgebildet ist:
- Empfang mindestens eines Mobilfunknetzes, welches von einem aktuellen Standort des Mobilfunkgeräts (102) empfangbar ist,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads und/oder des Betriebs der ersten Software, im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads und/oder des Betriebs der ersten Software (108) im Falle, dass der erste Abgleich ergibt, dass der aktuelle Standort des Mobilfunkgeräts (102) von der Menge der Soll-Standorte abweicht.

15. Computerprogrammprodukt mit von einem Prozessor ausführbaren Instruktionen zur Durchführung der Verfahrensschritte gemäß einem der vorigen Ansprüche.

## Geänderte Patentansprüche

### Geänderte Patentansprüche gemäss Regel 137(2) EPÜ.

**1.** Computer-implementiertes Verfahren zur standortbasierten Kontrolle eines Standorts eines Downloads einer ersten Software (108) auf eine speicherprogrammierbare Steuerung (116) eines Automatisierungssystems über eine Vorrichtung (106), wobei in der Vorrichtung (106) die erste Software (108) gespeichert ist, wobei ein Mobilfunkgerät (102) mit der Vorrichtung (106) verbunden ist, wobei sich die Vorrichtung (106) und das Mobilfunkgerät physisch am selben Standort befinden und über ein Kabel oder eine kabellose Nahfeldkommunikation miteinander verbunden sind, wobei das Verfahren umfasst:
- Ermittlung durch das Mobilfunkgerät (102) mindestens eines Mobilfunknetzes, welches von einem aktuellen Standort des Mobilfunkgeräts (102) empfangbar ist, wobei es sich bei dem Standort um einen Staat handelt, in dem das ermittelte Mobilfunknetz betrieben wird,
- Übertragung einer Liste mit aktuell empfangbaren Mobilfunknetzen durch eine zweite Software des Mobilfunkgeräts (102) an die Vorrichtung,
- erster Abgleich der empfangbaren Mobilfunknetze mit einer Menge von vordefinierten Soll-Mobilfunknetzen durch die Vorrichtung (106), wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads der ersten Software (108) durch die Vorrichtung (106), im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads der ersten Software (108) durch die Vorrichtung (106), im Falle, dass der erste Abgleich ergibt, dass der aktuelle Standort des Mobilfunkgeräts (102) von der Menge der Soll-Standorte abweicht,
wobei zur Durchführung des ersten Abgleichs eine erste Information über das ermittelte Mobilfunknetz an die Vorrichtung (106) übermittelt wird, wobei die Übermittlung der ersten Information durch das Mobilfunkgerät (102) verschlüsselt erfolgt.

**2.** Verfahren nach Anspruch 1, wobei die Durchführung des Verfahrens der standortbasierten Kontrolle durch Steuerbefehle für den Betrieb der Speicherprogrammierbaren Steuerung getriggert wird.

**3.** System zur standortbasierten Kontrolle eines Standorts eines Downloads einer ersten Software (108) auf eine Speicherprogrammierbare Steuerung (116) eines Automatisierungssystems über eine Vorrichtung (106), wobei in der Vorrichtung (106) die erste Software (108) gespeichert ist, wobei ein Mobilfunkgerät (102) mit der Vorrichtung (106) verbunden ist, wobei sich die Vorrichtung (106) und das Mobilfunkgerät physisch am selben Standort befinden und über ein Kabel oder eine kabellose Nahfeldkommunikation miteinander verbunden sind, wobei das System zur Durchführung folgender Verfahrensschritte ausgebildet ist:
- Ermittlung durch das Mobilfunkgerät (102) mindestens eines Mobilfunknetzes, welches von einem aktuellen Standort des Mobilfunkgeräts (102) empfangbar ist, wobei es sich bei dem Standort um einen Staat handelt, in dem das ermittelte Mobilfunknetz betrieben wird,
- Übertragung einer Liste mit aktuell empfangbaren Mobilfunknetzen durch eine zweite Software des Mobilfunkgeräts (102) an die Vorrichtung,
- erster Abgleich des empfangbaren Mobilfunknetzes mit einer Menge von vordefinierten Soll-Mobilfunknetzen durch die Vorrichtung (106), wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads der ersten Software (108) durch die Vorrichtung (106), im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads der ersten Software (108) durch die Vorrichtung (106), im Falle, dass der erste Abgleich ergibt, dass der aktuelle Standort des Mobilfunkgeräts (102) von der Menge der Soll-Standorte abweicht,
wobei zur Durchführung des ersten Abgleichs eine erste Information über das ermittelte Mobilfunknetz an die Vorrichtung (106) übermittelt wird, wobei die Übermittlung der ersten Information durch das Mobilfunkgerät (102) verschlüsselt erfolgt.

**4.** Computer-implementiertes Verfahren zur standortbasierten Kontrolle eines Standorts eines Downloads einer ersten Software (108) auf eine Speicherprogrammierbare Steuerung (116) eines Automatisierungssystems über eine Vorrichtung (106), wobei in der Vorrichtung (106) die erste Software (108) gespeichert ist, wobei ein Mobilfunkgerät (102) mit der Vorrichtung (106) verbindbar ist, wobei die Vorrichtung (106) und das Mobilfunkgerät physisch am selben Standort befindlich über ein Kabel oder eine kabellose Nahfeldkommunikation miteinander verbindbar sind, wobei das durch die Vorrichtung (106) ausgeführte Verfahren umfasst:
- Empfang von dem Mobilfunkgerät (102) mindestens eines durch das Mobilfunkgerät (102) ermittelten Mobilfunknetzes, welches von einem aktuellen Standort des Mobilfunkgeräts (102) empfangbar ist, wobei es sich bei dem Standort um einen Staat handelt, in dem das ermittelte Mobilfunknetz betrieben wird,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads der ersten Software, im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads der ersten Software (108) im Falle, dass der erste Abgleich ergibt, dass der aktuelle Standort des Mobilfunkgeräts (102) von der Menge der Soll-Standorte abweicht,
wobei zur Durchführung des ersten Abgleichs eine erste Information über das ermittelte Mobilfunknetz von der Vorrichtung (106) empfangen wird, wobei der Empfang der ersten Information von dem Mobilfunkgerät (102) verschlüsselt erfolgt.

**5.** Vorrichtung (106), wobei die Vorrichtung (106) zur standortbasierten Kontrolle eines Standorts eines Downloads einer ersten Software (108) auf eine Speicherprogrammierbare Steuerung (116) eines Automatisierungssystems über die Vorrichtung (106) ausgebildet ist, wobei in der Vorrichtung (106) die erste Software (108) gespeichert ist, wobei ein Mobilfunkgerät (102) mit der Vorrichtung (106) verbindbar ist, wobei die Vorrichtung (106) und das Mobilfunkgerät physisch am selben Standort befindlich über ein Kabel oder eine kabellose Nahfeldkommunikation miteinander verbindbar sind, wobei die Vorrichtung (106) zur Durchführung folgender Verfahrensschritte ausgebildet ist:
- Empfang von dem Mobilfunkgerät (102) mindestens eines durch das Mobilfunkgerät (102) ermittelten Mobilfunknetzes, welches von einem aktuellen Standort des Mobilfunkgeräts (102) empfangbar ist, wobei es sich bei dem Standort um einen Staat handelt, in dem das ermittelte Mobilfunknetz betrieben wird,
- erster Abgleich des empfangbaren Mobilfunknetzes mit einer Menge von vordefinierten Soll-Mobilfunknetzen, wobei durch das empfangbare Mobilfunknetz der aktuelle Standort identifizierbar ist, wobei durch die Menge von Soll-Mobilfunknetzen eine Menge von Soll-Standorten gegeben ist,
- Zulassen des Downloads der ersten Software, im Falle, dass der erste Abgleich ergibt, dass der aktuelle Standort des Mobilfunkgeräts (102) mit einem Soll-Standort der Menge von Soll-Standorten übereinstimmt,
- Abbruch des Downloads der ersten Software (108) im Falle, dass der erste Abgleich ergibt, dass der aktuelle Standort des Mobilfunkgeräts (102) von der Menge der Soll-Standorte abweicht,
wobei zur Durchführung des ersten Abgleichs eine erste Information über das ermittelte Mobilfunknetz von der Vorrichtung (106) empfangen wird, wobei der Empfang der ersten Information von dem Mobilfunkgerät (102) verschlüsselt erfolgt.

**6.** Computerprogrammprodukt mit von einem Prozessor ausführbaren Instruktionen zur Durchführung der Verfahrensschritte gemäß einem der vorigen Ansprüche.
